# EUROPEAN PATENT APPLICATION

(11) **EP 1 612 064 A1**
(43) Date of publication of application: **04.01.2006**
(21) Application number: 05076272.3
(22) Date of filing: 01.06.2005
(51) Int. Cl.: B60C 25/132

(54) **A self-centring blocking device for wheels on turntables of tyre-changing machines**

(30) Priority: 01.07.2004 IT MO20040168
(71) Applicant: Snap-on Equipment S.r.l., 42015 Correggio (RE) (IT)
(72) Inventor: Spaggiari, Rino, 42015 Correggio (Reggio Emilia) (IT)
(74) Representative: Gotra, Stefano

(57) **Abstract**

The device for blocking wheels on a turntable of tyre-changing machines comprises a hollow shaft (13) to a top of which is constrained a turntable (11) having a central opening in which a blocking pin (14) slides, which pin is provided with a truncoconical stopper (21) which engages superiorly with a central hole of the wheel rim (12). The pin is displaced and held in rim-blocking position by a pneumatic single-acting cylinder (22) and by means (28,29) for automatically constraining the pin to the cylinder. The blocking of the rim (12) is completed by a hinge mechanism for preventing rotation of the rim in relation to the table.

## Description

### Description.

The invention specifically but not exclusively relates to a self-centring device for wheels on turntables of tyre-changing machines.

Tyre mounting and dismounting operations are, as is known, performed using special machines and blocking a wheel on the wheel-bearing turntable the machines are equipped with.

Among the widely-used prior art devices, a common type machine, often chosen for its relatively simple structure, is one in which the rim, once resting on the turntable, is pressed against the table by a pressure on the hub, using sleeves or the like which are slidable along vertical rods passing through the central opening of the rim.

To block the wheel, the slidable support rod of the sleeve is placed in traction, automatically hooking up the lower end thereof to a pneumatic double-acting cylinder which is activated when the wheel is to be blocked on the turntable; the cylinder is opened to free the wheel at the end of the mounting and dismounting operations, done with the tyre-removal/fitting device.

Although the above-described blocking device exhibits a greater structural simplicity than other devices based on the use of radically-sliding pivots in slots made on the upper plane of the turntable, it does not however guarantee complete reliability as, differently to other machines, it offers a certain possibility of the wheel's rotating on the turntable.

A main aim of the present invention is to provide a very simple-to-operate wheel blocking device on turntables of tyre-removing machines, typical in devices where the hub is blocked, which also provides a very high degree of wheel stability during rotation of the rim on the turntable.

A further aim of the invention is to provide a wheel blocking device which exhibits a more rational and simplified structural configuration with respect to devices presently in use.

The above aims and others besides are all attained with a device for blocking wheels on a turntable of tyre-changing machines, comprising:
a hollow shaft to a top of which is constrained a turntable having a central opening;
a blocking pin which is slidable in the hollow shaft through the opening and which is provided with a truncoconical stopper which engages superiorly with the central hole of the wheel rim;
a pneumatic single-acting cylinder; coaxial to the hollow shaft, for moving and holding the pin in the blocking position, counterpositioned to elastic contrast means which act to unblock the pin;
automatic means for engaging the pin to the cylinder for transmission of motion in the blocking direction;
a hinge mechanism, solidly constrained to the blocking pin, for constraining the rim to the turntable in such a way as to prevent rotation of the rim in relation to the table.

The coupling between the blocking pin and the hollow shaft is such as to prevent relative rotation between the shaft and the pin; this is advantageously obtained by having a polygonal transversal section of the elements.

The blocking pin is also provided, preferably at a lower end thereof, with conical grooves in which the means for automatically constraining the pivot to the cylinder engage.

The means for engaging comprise a pawl hinged to the pneumatic cylinder, the pawl being subject to the action of elastic means for causing engagement thereof with the grooves during the axial translation consequent to the activation of the pneumatic cylinder.

The pneumatic cylinder comprises a cylinder which is slidable externally of the hollow shaft, the cylinder being activated to move downwards following an injection of compressed air into a conduit made in the hollow shaft and in communication with a chamber interpositioned between the cylinder and the turntable; the cylinder returns into the rest position thanks to the action of the elastic means interacting between the cylinder and the turntable. The elastic means are interpositioned between the cylinder of the pneumatic cylinder and a ring constrained inferiorly to the turntable; the elastic means compress during the axial translation of the cylinder following the injection of compressed air into the cylinder.

The hinge mechanism for constraining the rim to the turntable comprises a vertical-axis rod, connected superiorly to the blocking pin in such a way as to make axial movements and circular trajectories which easily engage it in the grooves present on the supper surface of the turntable after having passed through one of the wheel fastening holes present in the rim.

From the above description the advantages of the blocking device of the invention are evident, in terms of both its structural and operative simplicity and the effectiveness of the blocking obtained.

Further characteristics and advantages of the present invention will better emerge from the detailed description that follows of a preferred but non-exclusive embodiment of the invention, illustrated purely by way of a nonlimiting example in the accompanying figures of the drawings, in which:
Figure 1 is a perspective view of a blocking device of the invention;
Figure 2 is a perspective view in detail of a special component of the device of figure 1;
Figure 3 is a view from above of the blocking device of figure 1;
Figure 4 is a view in longitudinal section of the device of the invention to which a vehicle wheel rim is constrained;
Figure 5 is a view in transversal section of the device according to line V-V of figure 4;
Figures 6 and 7 show two view in longitudinal section of the device of the invention in two different operative configurations;
Figure 8 shows a view in transversal section of the device according to line VIII-VIII of figure 7.

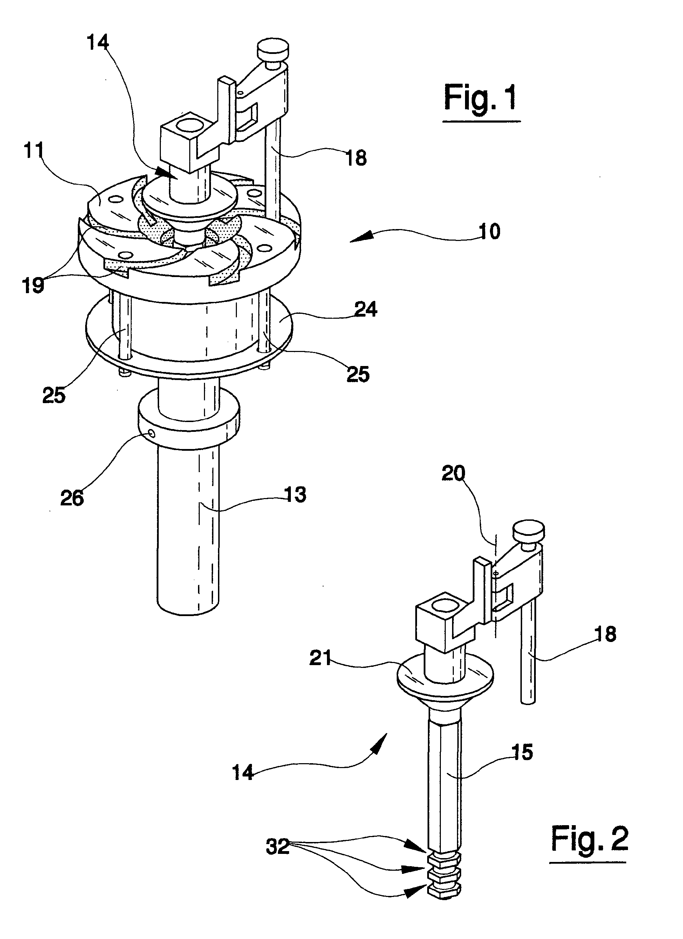

With reference to figure 1 of the drawings, 10 denotes in its entirety a blocking device for wheels on turntables 11, in tyre-removing and fitting machines.

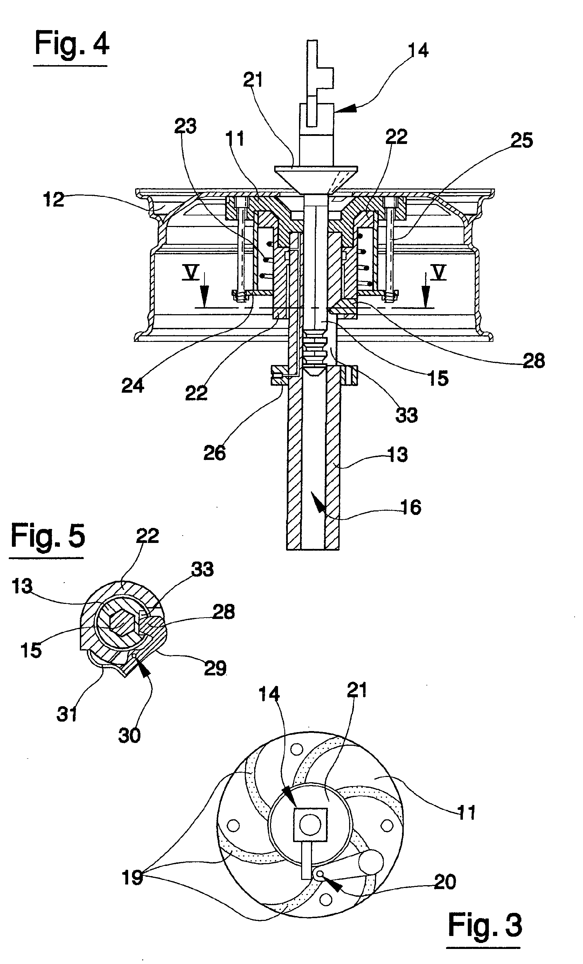

The rim 12 of the wheel is positioned on the turntable 11 as illustrated in figure 4. This positioning operation is carried out, as we shall see herein below, after the blocking pin 14 has been removed superiorly from the hollow shaft 13.

The pin 14 is slidably coupled to the hollow shaft 13 and thanks to the polygonal conformation of the stem 15 and the central cavity 16 of the shaft, rotation between the pin 14 and the turntable 11, solidly constrained to the upper end of the hollow shaft, is not possible.

This is useful for guaranteeing the stable positioning of the wheel on the turntable, preventing any possibility of relative rotation with the held of a vertical rod 18, connected superiorly to the blocking pin 14, by mechanisms which enable the rod 18 to move in circular trajectories so that it can easily engage with the fastening holes of the wheel rim 12 and with channels 19 shaped as arcs of circumference present in the upper surface of the turntable 11.

Note that the number of channels 19 is equal to the number of sides of the polygonal stem 15, and their arrangement is such that whatever the relative position of insertion of the pin 14 in the hollow shaft 13, there is always a corresponding channel 19 in which the rod 18 can engage after having crossed on one the fastening holes in the rim. The arced shape of the channel also enables identification, with a simple rotational movement of the rod about a rotation axis 20 thereof, of the fastening hole, whatever the size of the rim and the distance from the centre of the fastening hole.

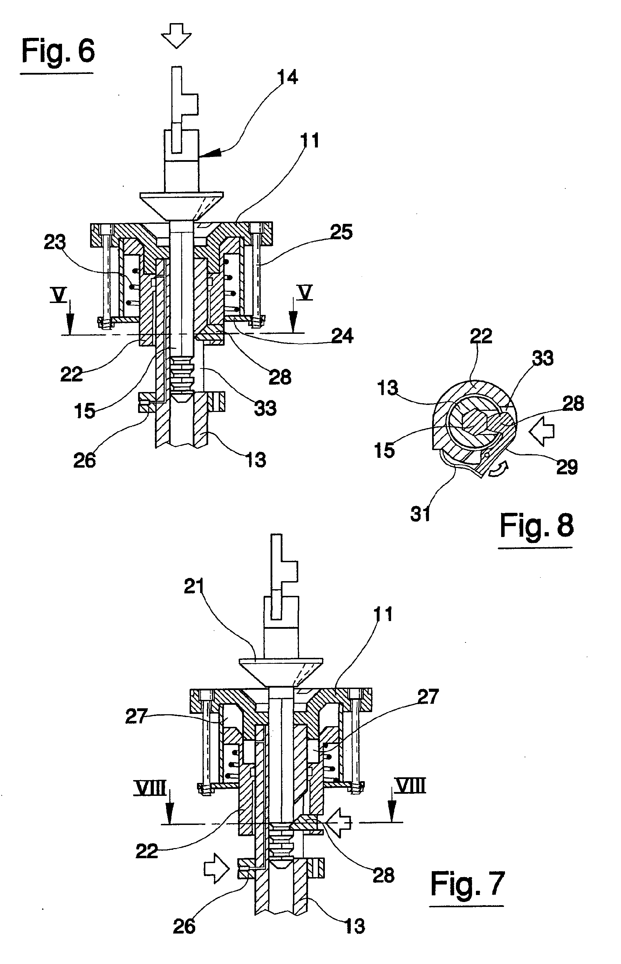

The axially-directed blockage of the rim is done by the pressing action exerted on the central hole of the rim by the truncoconical stopper 21, which is solidly constrained to the pin 14. The pin 14 is connected, by automatic means, to the mobile element of a pneumatic cylinder which is coaxial to the hollow shaft 13. The mobile element is constituted by a cylinder 22 which is slidable externally of the shaft 13 and normally maintained in contact inferiorly with the turntable 11 by elastic means 23 interpositioned between the cylinder and a ring 24, solidly constrained to the turntable. The ring 24 is solidly connected to the turntable 11 by tie-rods 25 distributed perimetrally to the ring 24. The elastic means 23 are compressed during the axial translation of the cylinder 22 following upon compressed air being forced through the inlet conduit 26 and passing through the shaft 13, terminating in an expansion chamber 27 (see figure 7) interpositioned between the cylinder 22 and the turntable 11.

During the downwards translation of the cylinder 22, the cylinder automatically engages with the blocking pin 14. Inferiorly of the cylinder 22 there is a pawl 28 which is positioned at an end of a lever 29 hinged at a point denoted by 30 to the cylinder, the pawl 28 being pushed towards the axis of the hollow shaft by a spring 31 acting on another end of the lever 29. The conformation of the pawl is such that it can laterally joint in successive grooves 32 located at the bottom end of the stem 15 and can drag the stem downwards up until the stopper 21 contacts the hub of the rim 11. Note that the pawl 28 and the relative lever 29 translate in a special cavity 33 made laterally in the hollow shaft 13.

The shapes of the pawl 28 and the grooves 32 are such that the connecting-up of the cylinder 22 and the pin 14 can happen only while the cylinder is translating downwards, see figures 7 and 8, while, when the cylinder is recalled into the start position by the spring 23, when the compressed air supply is stopped, the paw 28 frees automatically from the joint configuration and returns into the position shown in figure 5, as during the return movement there is not sufficient purchase between the pawl surface and the groove 32 surfaces, due to the inclination of the groove 32 surfaces. The functioning of the blocking device of the invention occurs essentially according to the above structural description, for the proposed preferred embodiment.

The operations requested of the operator to obtain self-centring blockage of the wheel on the tyre fitting machine equipped with the device are much simplified. It is sufficient, for correct and efficient positioning of he wheel on the turntable, once the blocking pin 14 has been superiorly removed, for the rim of the wheel to be simply rested on the turntable 11 and the pin newly inserted 14, taking care that the rod 18, constrained to the pin 14, inserts in one of the fastening holes of the wheel. This is easily obtained at the same time as the introduction of the pin 14 in the cavity 16, by rotating the rod about the axis of rotation 20, while contemporaneously arranging the rim on the turntable in order to bring one of the four fastening holes to the position of the rod 18.

At this point the compressed air supply is turned on to cause the rim to be locked against the turntable in the above-illustrated way.

Once the tyre mounting or dismounting operations are complete, the wheel is unblocked simply by stopping the supply of compressed air and then removing the blocking pin 14 superiorly.

Obviously the operative simplicity is safeguarded even where variations and modifications are brought to the above-described embodiment of the device.

For example, the grooves 32 on the stem 15 could be changed to enable blocking of wheels of various types and sizes.

The number of sides of the transversal-section polygon of the pin 14 can certainly be changed 14, as can the central cavity 16 the pin 14 is coupled with. Obviously as a consequence the number of arced grooves 19 in the upper surface of the turntable 11 will change.

The elastic means destined to permit automatic unblocking of the rim can be of various types and variously configured.

## Claims

1. A device for blocking wheels on a turntable (11) of tyre-changing machines, comprising:
a hollow shaft (13) to a top of which is constrained the turntable (11) having a central opening;
a blocking pin (14) which is slidable in the hollow shaft (13) through the opening and which is provided with a truncoconical stopper (21) which engages superiorly with a central hole of the wheel rim (12);
a single-acting pneumatic cylinder (22), coaxial to the hollow shaft, for moving and holding the blocking pin (14) in a blocking position, counterpositioned to elastic means (23) for contrast which act to unblock the blocking pin (14);
automatic means (28, 29) for automatically constraining the blocking pin (14) to the cylinder (22) for transmission of motion in a blocking direction;
a hinge mechanism, solidly constrained to the blocking pin (14), for constraining the rim (12) to the turntable (11) in such a way as to prevent rotation of the rim (12) in relation to the turntable (11).

2. The device of claim 1, **characterised in that** the blocking pin (14) comprises a stem (15) having a polygonal transversal section which is slidable in a central cavity (16) of the hollow shaft (13), the central cavity (16) exhibiting a polygonal transversal section corresponding to the section of the stem (15).

3. The device of claim 2, **characterised in that** the stem (15) comprises a plurality of grooves (32) arranged successively, in which the means for automatic engaging (28) of the blocking pin (14) laterally engage with the pneumatic cylinder (22).

4. The device of claim 1, **characterised in that** the means for automatic engaging comprise a pawl (28) which is constrained to the mobile element of the pneumatic cylinder (22), the pawl (28) being subject to action of the elastic means (31) which cause engagement of the pawl (28) with the plurality of grooves (32) during an axial translation consequent to activation of the pneumatic cylinder (22).

5. The device of any one of the preceding claims, **characterised in that** the pneumatic cylinder (22) comprises a cylinder which is externally slidable to the hollow shaft (13), the cylinder being activated to move downwards following supply thereto of compressed air through a conduit (26) afforded in the hollow shaft and communicating with a chamber (27) interpositioned between the cylinder (22) and the turntable (11).

6. The device of the preceding claim, **characterised in that** the elastic means (23) are interpositioned between the cylinder and a ring (24) constrained inferiorly to the turntable (11).

7. The device of any one of the preceding claims, **characterised in that** the hinge mechanism supports a vertical rod (18) connected to the blocking pin (14), the vertical rod (18) being able to make axial movements and follow circular trajectories in order to engage easily in channels (19) present in an upper surface of the turntable (11) after having passed through one of the fastening holes of the wheel present in the wheel rim (12).

8. The device of claim 7, **characterised in that** the channels (19) are arced and are in a number which is equal to a number of sides of the polygonal section of the stem (15) of the blocking pin (14).
